# EUROPÄISCHE PATENTSCHRIFT

(11) **EP 2 463 565 B1**
(45) Veröffentlichungstag und Bekanntmachung des Hinweises auf die Patenterteilung: **24.07.2013**
(21) Anmeldenummer: 11185073.1
(22) Anmeldetag: 13.10.2011
(51) Int. Cl.: F16L 21/035

(54) **Rohrverbindungsanordnung**
Pipe connection assembly
Agencement de jonction de conduites

(30) Priorität: 10.12.2010 DE 102010054154; 27.12.2010 DE 102010056448
(43) Veröffentlichungstag der Anmeldung: 13.06.2012
(73) Patentinhaber: McAven, Oscar, 22145 Braak (DE)
(72) Erfinder: McAven, Oscar, 22145 Braak (DE)
(74) Vertreter: Stork Bamberger

(56) Entgegenhaltungen:
- EP-A1- 0 999 397
- EP-A2- 0 877 189
- WO-A1-2008/030167

## Beschreibung

### Beschreibung

Die vorliegende Erfindung betrifft eine Anordnung zum Verbinden von Rohrelementen, gemäß dem Oberbegriff des Anspruchs 1.

Derartige Anordnungen kommen insbesondere beim Verbinden von Lüftungsrohren zum Einsatz. Es ist bekannt, Lüftungsrohre verschiedenen Durchmessers durch ineinanderschieben der Rohrenden zu verbinden. Bei Rohren gleichen Durchmessers ist zumeist der Durchmesser eines der Rohrenden zumindest um die Wandstärke des jeweils anderen Rohres reduziert, so dass diese ineinander steckbar sind. Die Verbindung zwischen den Rohren wird gewöhnlich mittels umlaufender Dichtungen abgedichtet. Um die Verbindung gegen ein unbeabsichtigtes Lösen zu sichern, wird die Verbindungsstelle vorzugsweise mit Selbstschneidschrauben, Nieten oder dergleichen im Bereich der sich überlappenden Rohrwandungen gesichert. Eine weitere Art der Rohrverbindung ist beispielsweise aus dem Dokument EP 1 039 202 A1 bekannt. Aus dem genannten Dokument geht eine Rohrverbindung für Lüftungsrohrsysteme hervor, bei dem ein inneres Röhrenelement in ein äußeres Röhrenelement mit enger Passung eingeführt wird. Zum Abdichten des sich zwischen dem inneren und äußeren Röhrenelement im zusammengesteckten Zustand ergebenden Spalts, ist eine um das innere Röhrenelement umlaufende Dichtlippe angeordnet. Diese Dichtlippe schmiegt sich an die Innenseite des äußeren Röhrenelements an und dichtet so den Spalt zwischen beiden Röhrenelementen ab. Mittels einer umlaufenden Einprägung, die an dem äußeren Röhrenelement angeordnet ist, sowie eines speziell gebogenen freien Endes des inneren Röhrenelements, verriegeln beide Röhrenelemente beim Einstecken selbsttätig.

Aus dem Dokument EP 0 877 189 A2 ist eine Einrichtung zum Abdichten von ineinander schiebbaren Rohren bekannt. Die Abdichtung der ineinander geschobenen Rohre erfolgt mittels eines an einer Dichtfläche des inneren Rohres angeordneten Dichtungselements. Beim Zusammenschieben der Rohre wird das Dichtungselement in den sich zwischen den jeweiligen Dichtflächen bildenden ringförmigen Dichtraum hineingepresst und so das Dichtungselement in radialer Richtung komprimiert. Diese Komprimierung bewirkt eine Verformung des Dichtelements korrespondierend zu der Oberflächengeometrie einer zweiten Dichtfläche, die mit zumindest einem Vorsprung versehen ist.

Nachteilig ist, dass bei den bekannten Rohrverbindungen nach einmaligem Verbinden der Rohre die Verbindung nicht mehr gelöst werden kann, ohne die Rohre oder zumindest Teile davon zerstören zu müssen. So ist es einerseits bei der aus dem Dokument EP 1 039 202 A1 bekannten Rohrverbindung beispielsweise nicht möglich, nach dem Zusammenstecken zweier Rohre diese wieder voneinander zu lösen. Um die miteinander verbundenen Rohre wieder voneinander lösen zu können, ist es erforderlich, zumindest die umlaufenden Einprägungen auszubohren, mit der Folge, die Rohre bzw. Teile davon zu zerstören. Ein weiterer Nachteil besteht darin, dass die Materialoberflächen der verbundenen Rohrabschnitte, insbesondere im Bereich der Verriegelung, unmittelbar aufeinander liegen. Aufgrund von Vibrationen kann es in diesen Bereichen zu Verschleißerscheinungen und Materialermüdungen kommen, so dass eine dauerhafte und zuverlässige Verriegelung der Rohrverbindung nicht gewährleistet werden kann.

Es ist daher Aufgabe der vorliegenden Erfindung, eine Anordnung zum Verbinden von Rohren vorzuschlagen, die eine zuverlässige, flexible und wieder lösbare Verbindung von Rohren gewährleistet.

Die Aufgabe wird durch eine Anordnung mit den eingangs genannten Merkmalen dadurch gelöst, dass

der Dichtungsabschnitt in einer nicht eingeschobenen ersten Position der ersten und zweiten Rohrelemente zumindest im Wesentlichen senkrecht zu der Rohraußenwand des zweiten Rohrelements angeordnet ist und in einer eingeschobenen zweiten Position der ersten und zweiten Rohrelemente derart ausgebildet und biegbar an dem Dichtungsmittelgrundkörper angeordnet ist, dass sich der Dichtungsabschnitt unter dichtendem Kontakt eines freien Schenkels des Dichtungsabschnitts mit der Rohrinnenwand des ersten Rohrelements entgegen der Einschubrichtung des zweiten Rohrelements neigt. Dies bietet den Vorteil, dass sich der Dichtungsabschnitt weitestgehend vollflächig an die Rohrinnenwand des ersten Rohrelements anschmiegt und zugleich mit einer entsprechenden Andruckkraft, die durch die Biegung des Dichtungsabschnitts in der eingeschobenen zweiten Position hervorgerufen wird, an die Rohrinnenwand gedrückt wird, so dass eine zuverlässige Dichtung der Verbindung zwischen dem ersten Rohrelement und dem zweiten Rohrelement erzielt wird. Ferner wird gewährleistet, dass die Materialoberflächen des ersten Rohrelements und des zweiten Rohrelements über das Dichtungsmittel bzw. über das Arretierungsmittel mechanisch entkoppelt sind. Schwingungen bzw. Vibrationen werden einerseits durch das zwischen dem ersten und dem zweiten Rohrelement liegende Dichtungsmittel gedämpft, andererseits können die Materialoberflächen des ersten Rohrelements und des zweiten Rohrelements nicht mehr unmittelbar aufeinander reiben, so dass Materialermüdungen zuverlässig vermieden werden. Ein weiterer Vorteil besteht darin, dass die Verbindung bei Bedarf zerstörungsfrei wieder lösbar ist.

Eine weitere zweckmäßige Ausbildung der Erfindung ist dadurch gekennzeichnet, dass der Arretierungsabschnitt auf dem Dichtungsmittelgrundkörper beabstandet von dem Dichtungsabschnitt angeordnet ist und zumindest eine Gleitfläche und eine Arretierungsfläche aufweist. Dies ist besonders vorteilhaft, da die Gleitfläche das Einschieben des zweiten Rohrelements in das erste Rohrelement mit einem nur geringen Kraftaufwand ermöglicht, während der Arretierungsabschnitt die Verbindung gegen ein ungewolltes Lösen zuverlässig sichert.

Gemäß einer weiter bevorzugten Ausbildung der Erfindung ist das Verriegelungsmittel als eine Einprägung und/oder Stanzung der Rohrwand des ersten Rohrelements ausgebildet und weist einen Gleitbereich zum Vorbeiführen des Arretierungsmittels an dem Verriegelungsmittel beim Einschieben des zweiten Rohrelements von der ersten Position in die zweite Position, sowie einen Verriegelungsbereich zum Arretieren der ersten und zweiten Rohrelemente miteinander in der zweiten Position auf. Der Gleitbereich bietet in Verbindung mit der Gleitfläche des Dichtungs- bzw. des Arretierungsmittels den Vorteil eines möglichst geringen Kraftaufwands beim Zusammenstecken der ersten und zweiten Rohrelemente.

Eine weitere bevorzugte Ausführungsform zeichnet sich dadurch aus, dass der Verriegelungsbereich zumindest teilweise korrespondierend zu dem Arretierungsmittel derart eingerichtet und ausgebildet ist, dass die ersten und zweiten Rohrelemente in der zweiten Position mittels Formschluss zwischen dem Verriegelungsbereich und dem Arretierungsmittel miteinander arretiert sind.

Eine besonders vorteilhafte Ausbildung der Erfindung zeichnet sich dadurch aus, dass das Verriegelungsbereich weiter einen Führungsbereich umfasst, wobei der Führungsbereich mit zumindest einer ersten Seite zumindest an einem Teil des Verriegelungsbereichs angrenzend angeordnet ist. Mittels des Führungsbereichs kann die Verbindung des ersten Rohrelements und des zweiten Rohrelements durch ein Verdrehen des ersten Rohrelements und des zweiten Rohrelements relativ zueinander und gleichzeitigem Ausüben einer nur geringen Zugkraft in entgegen gesetzter Richtung wieder gelöst werden. Jedoch ist ein Lösen beim Einwirken einer relativ geringen Zugkraft auf die Verbindung nur bei gleichzeitigem Verdrehen der ersten und zweiten Rohrelemente möglich, so dass die Verbindung andernfalls zuverlässig arretiert und gegen unbeabsichtigtes Lösen gesichert ist.

Weitere bevorzugte und/oder zweckmäßige Merkmale und Ausgestaltungen der Erfindung ergeben sich aus den Unteransprüchen und der folgenden Beschreibung, in der besonders bevorzugte Ausführungsformen anhand der beigefügten Zeichnung näher erläutert werden. Die Zeichnung zeigt:
- Fig. 1: einen Längsschnitt der Anordnung zum Verbinden zweier Rohrelemente gemäß einer ersten Ausführung der vorliegenden Erfindung in einer nicht eingeschobenen ersten Position,
- Fig. 2: einen Längsschnitt der Anordnung gemäß der ersten Ausführung der vorliegenden Erfindung beim Einschieben von der ersten Position in eine eingeschobene zweite Position,
- Fig. 3: einen Längsschnitt der Anordnung gemäß der ersten Ausführung der vorliegenden Erfindung in der eingeschobenen zweiten Position,
- Fig. 4: einen Längsschnitt der Anordnung gemäß der ersten Ausführung der vorliegenden Erfindung in der zweiten Position beim Lösen der Verbindung,
- Fig. 5: einen Längsschnitt der Anordnung gemäß der ersten Ausführung der vorliegenden Erfindung nach Lösen der Verbindung,
- Fig. 6: eine Teilbereichsansicht der Figur 1 in der ersten Position,
- Fig. 7: eine Teilbereichsansicht der Figur 3 in der zweiten Position,
- Fig. 8: eine Teilbereichsansicht in der ersten Position gemäß einer zweiten Ausführung der Erfindung,
- Fig. 9: eine Teilbereichsansicht in der zweiten Position gemäß der zweiten Ausführung der Erfindung,
- Fig. 10: eine Teilbereichsansicht in der ersten Position gemäß einer dritten Ausführung der Erfindung,
- Fig. 11: eine Teilbereichsansicht in der zweiten Position gemäß der dritten Ausführung der Erfindung,
- Fig. 12: eine Teilbereichsansicht in der ersten Position gemäß einer vierten Ausführung der Erfindung,
- Fig. 13: eine Teilbereichsansicht in der zweiten Position gemäß der vierten Ausführung der Erfindung,
- Fig. 14: eine Teilbereichsansicht in der ersten Position gemäß einer fünften Ausführung der Erfindung,
- Fig. 15: eine Teilbereichsansicht in der zweiten Position gemäß der fünften Ausführung der Erfindung und
- Fig. 16: eine Prinzipdarstellung beim Lösen der Verbindung zwischen den ersten und zweiten Rohrelementen,
- Fig. 17: eine Teilbereichsansicht in der ersten Position gemäß einer sechsten Ausführung der Erfindung,
- Fig. 18: eine Teilbereichsansicht in der zweiten Position gemäß der sechsten Ausführung der Erfindung,
- Fig. 19: eine Prinzipdarstellung beim Lösen der Verbindung zwischen den ersten und zweiten Rohrelementen gemäß der sechsten Ausführung der Erfindung,
- Fig. 20: eine Teilbereichsansicht in der ersten Position gemäß einer siebten Ausführung der Erfindung.
- Fig. 21: eine Teilbereichsansicht in der zweiten Position gemäß einer Variante der sechsten Ausführung der Erfindung,
- Fig. 22: eine Teilbereichsansicht in der zweiten Position gemäß noch einer weiteren Variante der sechsten Ausführung der Erfindung,

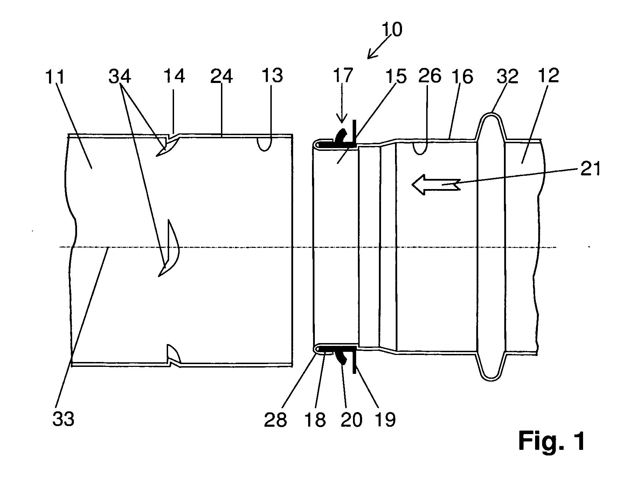

In den Figuren 1 bis 5 ist einen Längsschnitt der Anordnung 10 gemäß eines ersten Ausführungsbeispiels der vorliegenden Erfindung dargestellt. Die Anordnung 10 umfasst eine erstes Rohrelement 11 und eine zweites Rohrelement 12, wobei an der Rohrinnenwand 13 des ersten Rohrelements 11 ein Verriegelungsmittel 14 angeordnet ist. Dabei kann an der Rohrinnenwand 13 auch eine beliebige Anzahl der Verriegelungsmittel 14 vorgesehen sein. Die Anzahl richtet sich insbesondere nach dem Durchmesser der ersten und zweiten Rohrelemente 11, 12. Vorzugsweise sind die Verriegelungsmittel 14 rotationssymmetrisch bezüglich einer Längsachse 33 des ersten bzw. des zweiten Rohrelements 11, 12 angeordnet. Das zweite Rohrelement 12 ist im Bereich eines Endabschnitts 15 in das erste Rohrelement 11 einschiebbar. Dazu weist das zweite Rohrelement 12 im Bereich des Endabschnitts 15 einen Außendurchmesser auf, der kleiner als ein Innendurchmesser des ersten Rohrelements 11 ist. Selbstverständlich ist es auch möglich, dass der Außendurchmesser des zweiten Rohrelements 12 kleiner als der Innendurchmesser des ersten Rohrelements 11 gewählt ist, also der Außendurchmesser des zweiten Rohrelements 12 zumindest im Wesentlichen über die gesamte Rohrlänge konstant kleiner ist, sodass in dem Bereich des Endabschnitts 15 eine Durchmesserreduktion nicht zwingend erforderlich ist. Alternativ ist das erste Rohrelement 11 zumindest an einem seiner Enden geweitet, so dass das zweite Rohrelement 12 in jedem Fall zumindest mit dem Endabschnitt 15 in das erste Rohrelement 11 einschiebbar ausgebildet ist. Ferner ist die vorliegende Erfindung nicht ausschließlich auf kreisrunde Rohrelemente 11, 12 beschränkt. Vielmehr ist jede Querschnittform der Rohrelemente 11, 12 geeignet, beispielsweise Rohre mit ovalem, rechteckigem oder mehreckigem Querschnitt.

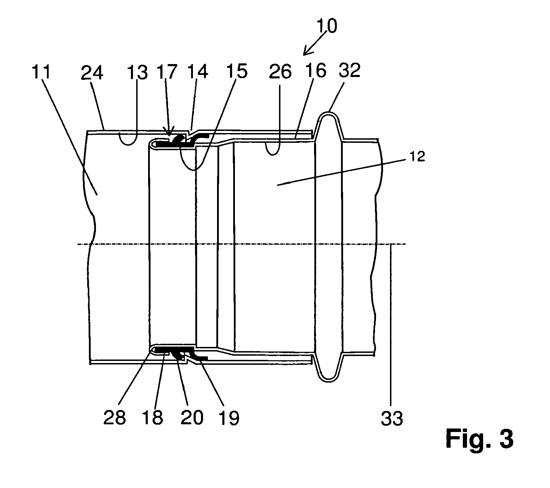

In zumindest einem Teilbereich des Endabschnitts 15 ist an einer Rohraußenwand 16 ein separates Dichtungsmittel 17 vollständig umlaufend angeordnet. Das Dichtungsmittel 17 ist dabei zum Abdichten einer Verbindung zwischen dem ersten Rohrelement 11 und dem zweiten Rohrelement 12 eingerichtet und ausgebildet. Vorzugsweise ist das Dichtungsmittel 17 aus einem elastischen Kunststoff gefertigt, beispielsweise aus Ethylen-Propylen-Dien-Kautschuk (EPDM). Neben EPDM kann das Dichtungsmittel 17 jedoch auch aus weiteren Kunststoff- oder Nichtkunststoffverbindungen bestehen bzw. aus einer Kombination daraus zusammengesetzt sein, sofern diese geeignet sind, die dichtende Verbindung zwischen dem ersten Rohrelement 11 und dem zweiten Rohrelement 12 zu gewährleisten. Alternativ kann das separate Dichtungsmittel 17 beispielsweise als Kunststoffteil an das zweite Rohrelement 12 angespritzt werden. Dabei kann das Dichtungsmittel 17 aus einem oder mehreren Schichten eines oder mehrere Materialarten bestehen. Das Dichtungsmittel 17 ist zugleich als ein Arretierungsmittel ausgebildet. In einer in der Figur 3 gezeigten eingeschobenen ersten Position erfolgt eine Arretierung des ersten Rohrelements 11 mit dem zweiten Rohrelement 12 unter Eingriff des Dichtungsmittels 17 mit dem Verriegelungsmittel 14. Anders ausgedrückt erfüllt das Dichtungsmittel 17 zwei Funktionen. Einerseits dichtet das Dichtungsmittel 17 die Verbindung zwischen dem ersten Rohrelement 11 und dem zweiten Rohrelement 12 durch Anliegen an der Rohrinnenwand 13 zumindest gas- und/oder fluiddicht ab, andererseits arretiert das Dichtungsmittel 17 in seiner Funktion als das Arretierungsmittel die ersten und zweiten Rohrelemente 11, 12 miteinander, indem das Dichtungsmittel 17 mit dem Verriegelungsmittel 14 in Eingriff kommt. Ein Herausrutschen bzw. ein ungewolltes Lösen der Verbindung zwischen dem ersten und dem zweiten Rohrelement 11, 12 wird so zuverlässig vermieden.

Gemäß einer bevorzugten Ausführung der Erfindung umfasst das Dichtungsmittel 17 einen Dichtungsmittelgrundkörper 18, zumindest einen Dichtungsabschnitt 19 und zumindest einen Arretierungsabschnitt 20. Der Dichtungsmittelgrundkörper 18 ist beispielsweise in Form eines Dichtbands bzw. Dichtrings ausgebildet und an der Rohraußenwand 16 des zweiten Rohrelements 12 zumindest in dem Teilbereich des Endabschnitts 15 vollständig umlaufend angeordnet. Dabei kann sich der Dichtungsmittelgrundkörper 18 entweder nur über den Teilbereich des Endabschnitts 15 oder aber über einen gesamten Außenwandbereich des Endabschnitts 15 erstrecken. Bevorzugt ist der Dichtungsmittelgrundkörper 18 unter strammem Sitz um die Rohraußenwand 16 des zweiten Rohrelements 12 umlaufend angeordnet, indem der Dichtungsmittelgrundkörper 18 eine zumindest etwas geringere Umfangslänge als die Rohraußenwand 16 des zweiten Rohrelements 12 aufweist. An dem Dichtungsmittelgrundkörper 18 sind der Dichtungsabschnitt 19 sowie der Arretierungsabschnitt 20 biegsam angeordnet.

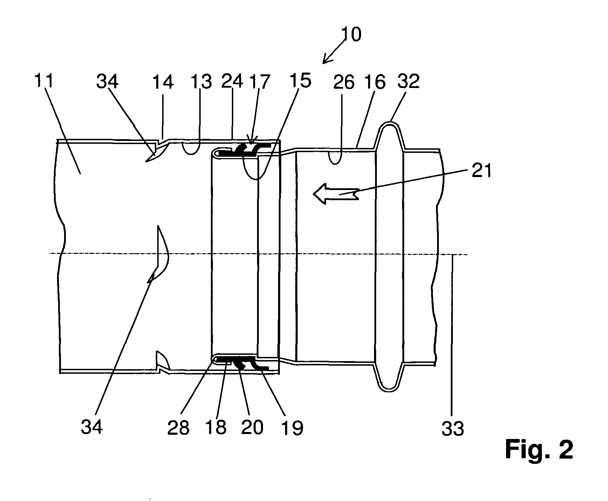

Wie in der Figur 2 gezeigt werden der Dichtungsabschnitt 19 bzw. der Arretierungsabschnitt 20 beim Einführen des zweiten Rohrelements 12 in eine Einschubrichtung 21 ausgehend von der ersten Position in eine eingeschobene zweite Position aufgrund der Biegsamkeit des Dichtungsabschnitts 19 und des Arretierungsabschnitts 20 zu dem zweiten Rohrelement 12 hingebogen und schmiegen sich an die Rohrinnenwand 13 des ersten Rohrelements 11 unter Bildung entsprechender Dichtflächen an. Alternativ ist es auch möglich, dass der Dichtungsabschnitt 19 und der Arretierungsabschnitt 20 zusammen als eine einzige Dicht- bzw. Arretierungslippe ausgebildet sind.

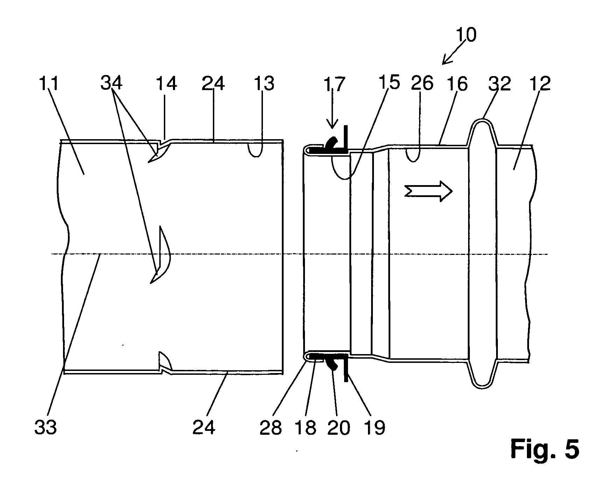

Gemäß einer weiter bevorzugten Ausbildung der Erfindung sind der Dichtungsabschnitt 19 und der Arretierungsabschnitt 20, wie in den Figuren 1 bis 5 gezeigt, als jeweils getrennte Abschnitte ausgeführt. Besonders bevorzugt ist der Dichtungsabschnitt 19 in der nicht eingeschobenen ersten Position (vgl. Fig. 1 und 5) der ersten und zweiten Rohrelemente 11, 12 senkrecht oder im Wesentlichen senkrecht zu der Rohraußenwand 16 angeordnet. Der Dichtungsabschnitt 19 weist vorzugsweise eine Höhe auf, die so gewählt ist, dass sich der Dichtungsabschnitt 19 zumindest über den gesamten Innendurchmesser des ersten Rohrelements 11 erstreckt. Mittels der biegbaren Anordnung des Dichtungsabschnitts 19 an dem Dichtungsmittelgrundkörper 18 ist der Dichtungsabschnitt 19 derart bewegbar an dem Dichtungsmittelgrundkörper 18 angeordnet, dass beim Einschieben des zweiten Rohrelements 12 in das erste Rohrelement 11 der Dichtungsabschnitt 19 entgegen der Einschubrichtung 21 geneigt wird (vgl. Fig. 2 und 3). Der Dichtungsabschnitt 19 ist also derart biegbar angeordnet, dass der Dichtungsabschnitt 19 in einer nicht eingeschobenen ersten Position senkrecht oder im Wesentlichen senkrecht zu der Rohraußenwand 16 des zweiten Rohrelements 12 angeordnet ist, während der Dichtungsabschnitt 19 in einer eingeschobenen zweiten Position bzw. während des Bewegens in diese zweite Position entgegen der Einschubrichtung 21 geneigt ist bzw. geneigt wird. Der Neigung des Dichtungsabschnitts 19 wirkt eine Rückstellkraft entgegen, so dass der Dichtungsabschnitt 19 daher mit einer entsprechenden Andruckkraft beaufschlagt und gegen die Rohrinnenwand 13 des ersten Rohrelements 11 gedrückt wird. So wird eine zuverlässige Abdichtung der Verbindung zwischen den ersten und zweiten Rohrlementen 11, 12 gewährleistet.

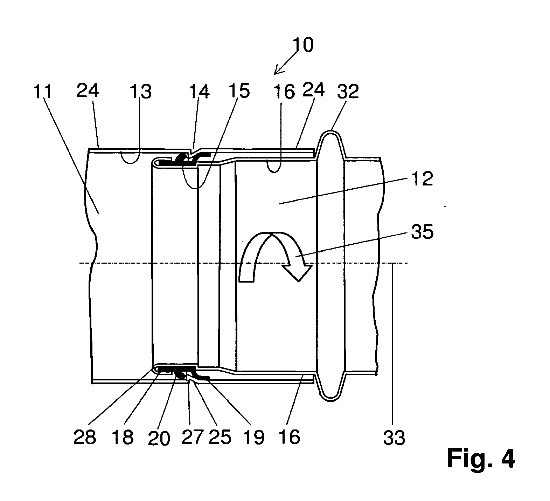

Gemäß einer vorteilhaften Weiterbildung der Erfindung ist der auf dem Dichtungsmittelgrundkörper 18 angeordnete Arretierungsabschnitt 20 beabstandet von dem Dichtungsabschnitt 19 angeordnet und weist eine Gleitfläche 22 und eine Arretierungsfläche 23 auf. Die Gleitfläche 22 ist derart ausgebildet, dass das Verriegelungsmittel 14 den Arretierungsabschnitt 20 beim Einschieben des zweiten Rohrelements 12 in das erste Rohrelement 11 mit geringem Kraftaufwand übergleitet. Auf diese Weise kann das zweite Rohrelement 12 verhältnismäßig leicht, das heißt mit verhältnismäßig geringem Kraftaufwand, in das zweite Rohrelement 11 eingeschoben werden. Mittels der Arretierungsfläche 23 des Arretierungsabschnitts 20 werden die ersten und zweiten Rohrelemente 11, 12 in der eingeschobenen zweiten Position miteinander arretiert. Dazu ist die Arretierungsfläche 23 derart ausgebildet, dass diese das Verriegelungsmittel 14 hintergreift, so dass bei einer Beaufschlagung des ersten und zweiten Rohrelemente 11, 12 mit Zugkräften in jeweils entgegen gesetzten Richtungen ein Herausrutschen des zweiten Rohrelements 12 aus dem ersten Rohrelement 11 zuverlässig vermieden wird. Mit anderen Worten ist die Gleitfläche 22 derart ausgebildet, dass diese möglichst ohne großen Kraftaufwand an dem Verriegelungsmittel 14 in der Einschubrichtung 21 vorbeigleitet, während die Arretierungsfläche 23 mittels Eingriff mit dem Verriegelungsmittel 14 ein Lösen der Verbindungen zwischen dem ersten Rohrelement 11 und dem zweiten Rohrelement 12 zuverlässig verhindert. Ein Lösen der Verbindung kann unter gleichzeitigem Drehen des zweiten Rohrelements 12 relativ zu dem ersten Rohrelement 11 und Beaufschlagen der ersten und zweiten Rohrelementen 11, 12 mit einer entsprechend hohen Zugkraft in Richtung der Längsachse 33 erreicht werden (vgl. Figuren 4 und 5).

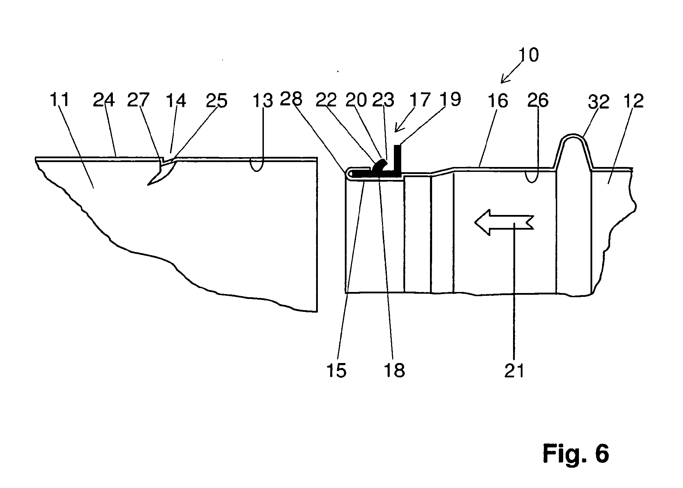

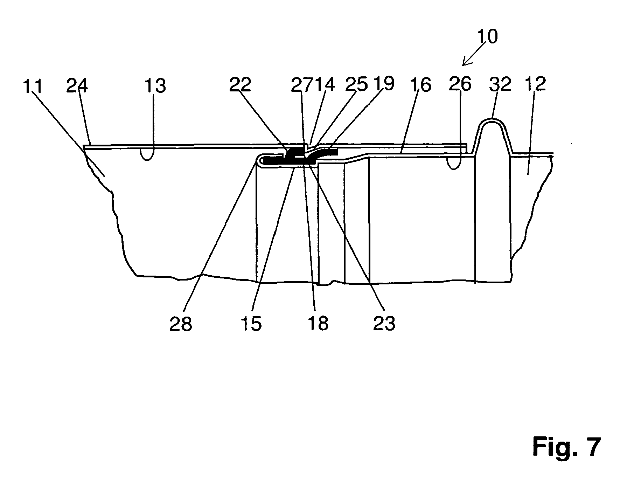

Wie den Teilbereichsansichten der Figuren 6 und 7 zu entnehmen ist, sind der Dichtungsabschnitt 19 und der Arretierungsabschnitt 20 voneinander beabstandet angeordnet. Bevorzugt ist der Abstand zwischen dem Dichtungsabschnitt 19 und dem Arretierungsabschnitt 20 so eingerichtet, dass sich der Arretierungsabschnitt 20 beim Übergleiten des Verriegelungsmittels 14 verformen kann, ohne mit dem Dichtungsabschnitt 19 in Berührung zu kommen. Auf diese Weise wird ein Verklemmen des Arretierungsabschnitts 20 mit dem Dichtungsabschnitt 19 vermieden, das wiederum einen erhöhten Kraftaufwand bzw. u.U. die Gefahr einer Beschädigung des Arretierungsabschnitts 20 bzw. des Dichtungsabschnitts 19 zur Folge haben könnte.

Eine bevorzugte Weiterbildung der Erfindung zeichnet sich dadurch aus, dass die Gleitfläche 22 bezüglich einer Senkrechten S zu der Rohraußenwand 16 bzw. zu der Rohrinnenwand 13 entgegen der Einschubrichtung 21 geneigt und/oder gekrümmt ausgebildet ist. Die Gleitfläche 22 erstreckt sich also ausgehend von dem Dichtungsmittelgrundkörper 18 entweder geneigt und/oder gekrümmt nach außen. Wie in der Teilbereichsansicht der Figuren 6 und 7 zu erkennen ist, ist die Gleitfläche 22 vorzugsweise konvex gekrümmt. Alternativ ist es aber auch möglich, die Gleitfläche 22 konkav gekrümmt auszubilden oder die Gleitfläche 22 als eine gegenüber der Senkrechten S geneigte Fläche anzuordnen. Die Neigung bzw. Krümmung der Gleitfläche 22 bewirkt, dass sich das zweite Rohrelement 12 ohne großen Kraftaufwand in das erste Rohrelement 11 einschieben lässt, da eine zwischen dem Verriegelungsmittel 14 und der Gleitfläche 22 wirkende Klemmkraft aufgrund der Neigung bzw. Krümmung der Gleitfläche 22 erst mit weiterer Einschubtiefe des zweiten Rohrelements 12 zunimmt. Dieser zunehmenden Klemmkraft kann die Gleitfläche 22 bzw. der gesamte Arretierungsabschnitt 20 durch Verformung bzw. durch Umbiegen in gewissen Grenzen ausweichen, so dass die Klemmkraft im Wesentlichen auf einem konstant geringen Niveau gehalten wird. Erreicht der zweite Rohrabschnitt 12 beim Einschieben in den ersten Rohrabschnitt 11 die zweite Position (vgl. Fig. 7), hintergreift der Arretierungsabschnitt 20 das Verriegelungsmittel 14. Damit ist die Verbindung der ersten und zweiten Rohrelemente 11, 12 zuverlässig verriegelt. Wird diese Verbindung der ersten und zweiten Rohrelemente 11, 12 auf Zug beansprucht, verhindert der mit der Arretierungsfläche 23 das Verriegelungsmittel 14 hintergreifende Arretierungsabschnitt 20 ein unbeabsichtigtes Lösen der Verbindung.

Gemäß einer weiter bevorzugten Ausbildung der Erfindung ist die Arretierungsfläche 23 gegenüber der Senkenrechten S zu der Rohraußenwand 16 entgegen der Einschubrichtung 21 geneigt und/oder gekrümmt ausgebildet. Mit anderen Worten ist die Arretierungsfläche 23 gegensätzlich zu der Gleitfläche 22 geneigt und/oder gekrümmt. Beispielsweise ist die Gleitfläche 22, wie beispielsweise den Figuren 6 und 7 zu entnehmen ist, aus einer Blickrichtung entgegen der Einschubrichtung 21 konvex gekrümmt, während die Arretierungsfläche 23 zumindest auf einem Teilbereich gerade verläuft oder konkav gekrümmt ist. Alternativ kann die Gleitfläche 22 - bei gleicher Blickrichtung - nach außen geneigt ausgebildet sein, während die Arretierungsfläche 23 nach innen geneigt angeordnet ist. In diesem Fall beschreiben die Gleitfläche 22, die Arretierungsfläche 23 und eine Oberseite des angrenzenden Dichtungsmittelgrundkörpers 18 im Schnitt eine Dreiecksfläche. Selbstverständlich kann auch die Arretierungsfläche 23 gekrümmt sein, wenn die Gleitfläche 22 beispielsweise ausschließlich geneigt ist und umgekehrt. Ferner können die Gleitfläche 22 und die Arretierungsfläche 23 jeweils mehrere Abschnitte umfassen, wobei einige dieser Abschnitte gekrümmt und andere Abschnitte geneigt ausgebildet sind. Auch ist es möglich, dass die Arretierungsfläche 23 zumindest in einem Teilbereich zumindest im Wesentlichen parallel zu der Rohraußenwand 16 eingerichtet und ausgebildet ist. Besonders bevorzugt ist das Dichtungsmittel 17 einstückig ausgebildet, also aus einem Stück gefertigt ist, beispielsweise als Spritz-oder Extrusionsteil. Wie bereits zuvor beschrieben, kann das Dichtungsmittel 17 aus verschiedenen Materialien einstückig gebildet sein und/oder optional durch Anspritzen an dem zweiten Rohrelement 12 angeordnet sein.

Gemäß einer weiter bevorzugten Ausgestaltung der Erfindung ist das Verriegelungsmittel 14 als eine Einprägung der Rohrwand 24 des ersten Rohrelements 11 ausgebildet. Ferner weist das Verriegelungsmittel 14 einen Gleitbereich 25 auf, der derart ausgebildet und eingerichtet ist, dass das Dichtungsmittel 17 bzw. das Arretierungsmittel beim Einschieben des zweiten Rohrelements 12 von der ersten Position in die zweite Position an dem Verriegelungsmittel 14 vorbeischiebbar ist. Eine mögliche Ausgestaltung ist beispielsweise den Figuren 6 und 7 zu entnehmen. Mit Blickrichtung in die Einschubrichtung 21 erstreckt sich der Gleitbereich 25 ausgehend von der Rohrinnenwand 13 des ersten Rohrelements 11 zur Rohrmitte geneigt und/oder gekrümmt. Anders ausgedrückt ist die das Verriegelungsmittel 14 bildende Einprägung der Rohrwand 24 in Richtung zu der Längsachse 33 des ersten Rohrelements 11 gerichtet, wobei der Gleitbereich 25 kontinuierlich von der Rohrinnenwand 13 in Richtung der Rohrmitte bzw. der Längsachse 33 gegenüber der Rohrinnenwand 13 ansteigt. An den Gleitbereich 25 schließt sich vorzugsweise unmittelbar ein Verriegelungsbereich 27 an. Der Verriegelungsbereich 27 dient der Arretierung der ersten und zweiten Rohrelemente 11, 12 in der zweiten Position, in der der Arretierungsabschnitt 20 den Verriegelungsbereich 27 des Verriegelungsmittels 14 hintergreift. Alternativ ist zwischen dem Gleitbereich 25 und dem Verriegelungsbereich 27 zumindest ein weiterer Übergangsbereich angeordnet.

Eine weitere vorteilhafte Ausgestaltung der Erfindung sieht vor, dass der Verriegelungsbereich 27 oder zumindest ein Teil des Verriegelungsbereichs 27 korrespondierend zu dem Dichtungsmittel 17 bzw. dem Arretierungsmittel ausgebildet und eingerichtet ist. Auf diese Weise werden die ersten und zweiten Rohrelemente 11, 12 in der zweiten Position mittel Formschluss zwischen dem Verriegelungsbereich 27 und dem Arretierungsmittel arretiert. Vorzugsweise ist zumindest der Verriegelungsbereich 27 korrespondierend zu der Arretierungsfläche 23 ausgebildet. Wird die Verbindung der ersten und zweiten Rohrelemente 11, 12 auf Zug belastet, so liegt die Arretierungsfläche 23 zumindest teilweise flächig, besonders bevorzugt weitestgehend flächig, an dem Verriegelungsbereich 27 an und ermöglicht so eine optimale Kraftübertragung der entsprechenden Zugkraft von der Arretierungsfläche 23 auf den Verriegelungsbereich 27 unter Vermeidung einer hohen Flächen-, Linien- bzw. Punktlast, die ggf. zu einer Verformung oder ggf. zu einer dauerhaften Beschädigung des Dichtungsmittels 17 bzw. des Arretierungsmittels führen könnte.

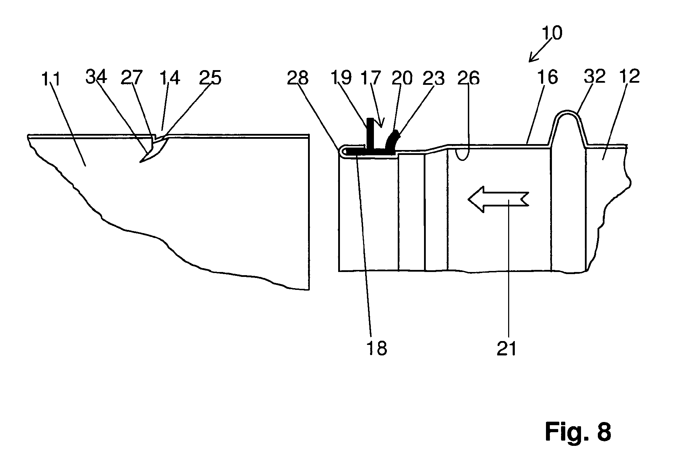

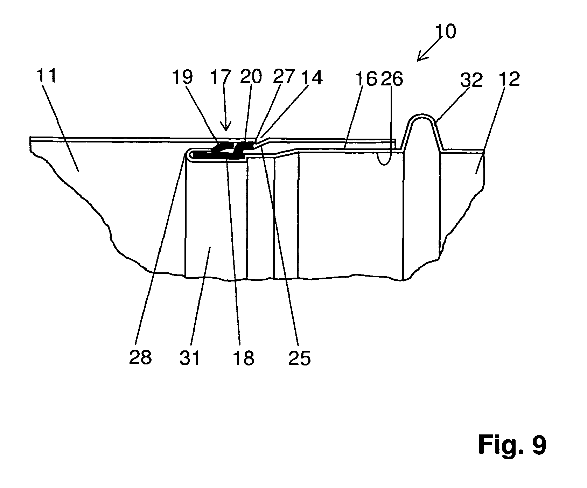

Die Figuren 8 und 9 zeigen eine zweite bevorzugte Ausführungsform der Erfindung, die sich von der in den Figuren 1 bis 7 gezeigten ersten Ausführungsform darin unterscheidet, dass die Positionen von dem Dichtungsabschnitt 19 und dem Arretierungsabschnitt 20 gegenüber den Positionen der ersten Ausführungsform vertauscht sind. Beim Einschieben des zweiten Rohrelements 12 in das erste Rohrelement 11 wird daher zunächst der Dichtungsabschnitt 19 an dem Verriegelungsmittel 14 vorbeigleiten, bevor anschließend der Arretierungsabschnitt 20 das Verriegelungsmittel 14 hintergreift und die ersten und zweiten Rohrelemente 11, 12 miteinander arretiert.

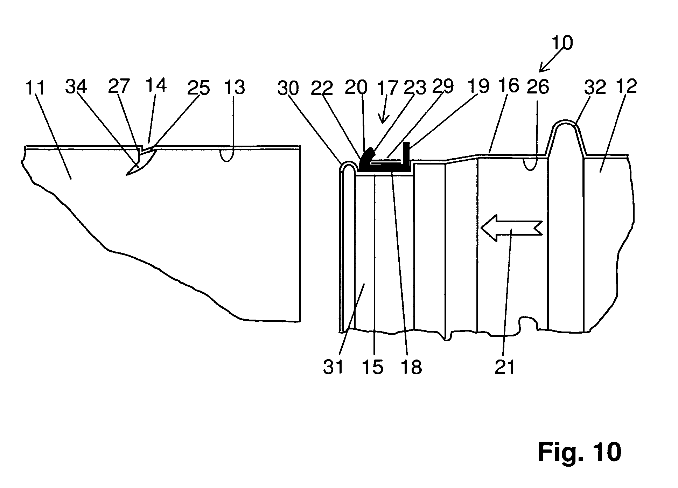

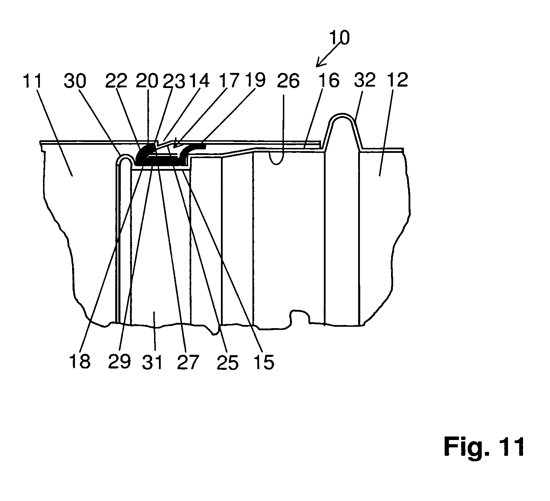

Die Figuren 10 und 11 zeigen eine dritte Ausführungsform der Erfindung, die sich von der in den Figuren 1 bis 7 gezeigten Ausführungsform ausschließlich in der Befestigung des Dichtungsmittels 17 bzw. des Arretierungsmittel unterscheidet. Gemäß der ersten Ausführungsform ist das Dichtungsmittel 17 bzw. das Arretierungsmittel mittels einer Klemmung gehalten. Dazu ist das zweite Rohrlement 12 am Ende des Endabschnitts 15 mit einem umbördelten Rand 28 versehen. Unter diesem umbördelten Rand 28 ist ein Teilbereich des Dichtungsmittels 17 bzw. des Dichtungsmittelgrundkörpers 18 eingeklemmt. Zusätzlich verhindert der umbördelte Rand 28 ein Verrutschen des Dichtungsmittels 17 bzw. Arretierungsmittels bei Beaufschlagung mit Kräften in längsaxialer Richtung, also bei Beaufschlagung mit Kräften in oder entgegen der Einschubrichtung 21. Hiervon unterscheidet sich die in den Figuren 8 und 9 gezeigt zweite Ausführungsform gegenüber der ersten Ausführungsform darin, dass das Dichtungsmittel 17 bzw. das Arretierungsmittel mittels eines umlaufenden Spannrings 29 kraftschlüssig am zweiten Rohrelement 12 angeordnet ist. Um das Dichtungsmittel 17 bzw. das Arretierungsmittel zusätzlich gegen ein längsaxiales Verrutschen zu sichern, ist optional eine Endsicke 30 an dem Endabschnitt 15 vorgesehen, die ergänzend das Dichtungsmittel 17 bzw. das Arretierungsmittel formschlüssig gegen ein Verrutschen in längsaxialer Richtung sichert. Vorzugsweise weist das zweite Rohrelement 12 einen Bereich 31 mit reduziertem Außendurchmesser gegenüber den weiteren Bereichen des zweiten Rohrelements 12 auf, so dass das Dichtungsmittel 17 bzw. der Dichtungsmittelgrundkörper 17 in diesem Bereich 31 mit reduziertem Außendurchmesser zusätzlich formschlüssig gehalten angeordnet ist. Alternativ ist es auch möglich, dass die Positionen von dem Dichtungsabschnitt 19 und dem Arretierungsabschnitt 20 vertauscht sind, entsprechend der in den Figuren 8 und 9 gezeigten zweiten Ausführungsform.

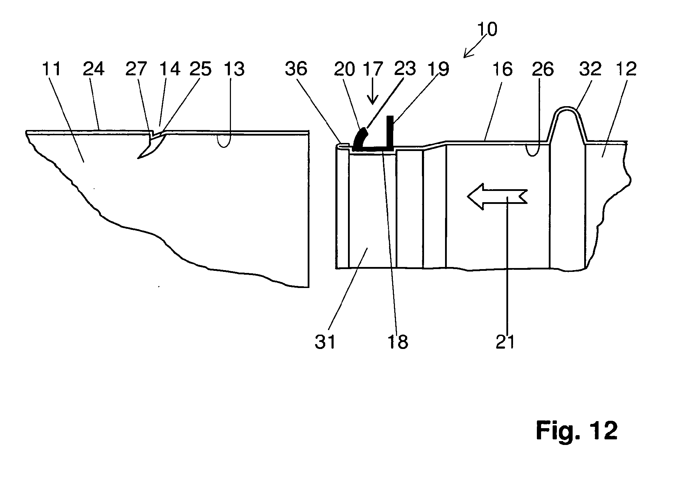

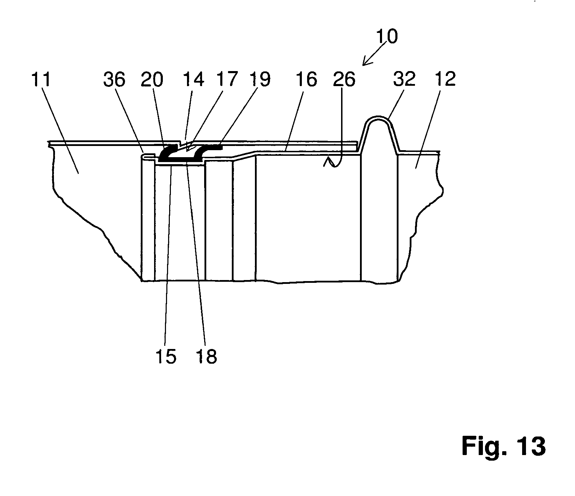

Eine vierte Ausführungsform der Erfindung ist in den Figuren 12 und 13 dargestellt. Diese Ausführungsform entspricht der in den Figuren 10 und 11 gezeigten dritten Ausführungsform, jedoch mit dem Unterschied, dass das Dichtungsmittel 17 bzw. das Arretierungsmittel ausschließlich durch Formschluss an dem Endabschnitt 15 angeordnet ist. Selbstverständlich ist es auch möglich, das Dichtungsmittel 17 bzw. das Arretierungsmittel ergänzend mit einem in den Figuren 12 und 13 nicht gezeigten umlaufenden Spannring 29 zu sichern. Besonders bevorzugt ist der Endabschnitt 15 endseitig als ein Umschlag 36 ausgebildet und eingerichtet.

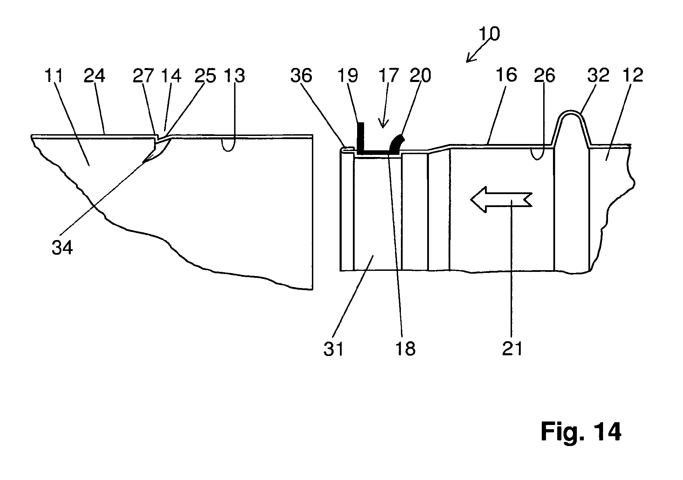

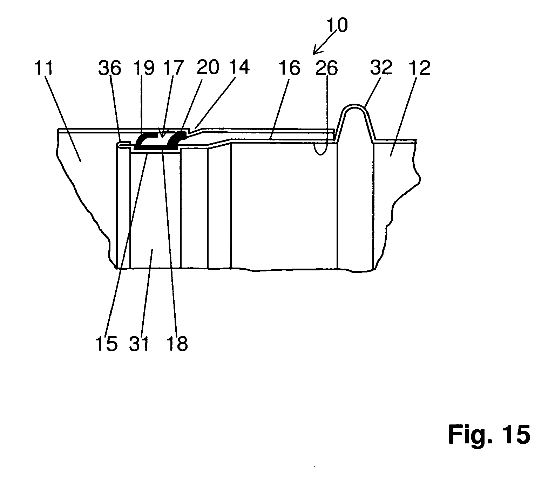

In den Figuren 14 und 15 ist eine fünfte Ausführungsform gezeigt, die der in den Figuren 12 und 13 dargestellten vierten Ausführungsform entspricht, jedoch sind hier analog zu der dritten Ausführungsform (vgl. Figuren 10 und 11) die Positionen des Dichtungsabschnitts 19 und des Arretierungsabschnitts 20 entsprechend vertauscht. Zur Vermeidung von Wiederholungen wird auf die entsprechenden Textpassagen der Beschreibung der dritten Ausführungsform verwiesen.

Selbstverständlich ist die vorliegende Erfindung nicht auf die vorgenannten Ausführungsformen beschränkt, sondern umfasst vielmehr jede Kombination einzelner Merkmale der beschriebenen Ausführungsformen. In allen Ausführungsformen kann es zweckmäßig sein, dass Dichtungsmittel 17 bzw. das Arretierungsmittel ausschließlich oder zusätzlich mittels einer Klebeverbindung an dem Endabschnitt 15 anzuordnen. Bevorzugt umfasst das zweite Rohrelement 12 eine Begrenzungssicke 32, die beispielsweise als nach außen geprägter Wulst an dem zweiten Rohrelement 12 angeordnet ist. Die Begrenzungssicke 32 dient als Endanschlag, der die maximale Einschubtiefe des zweiten Rohrelements 12 in das erste Rohrelement 11 festlegt.

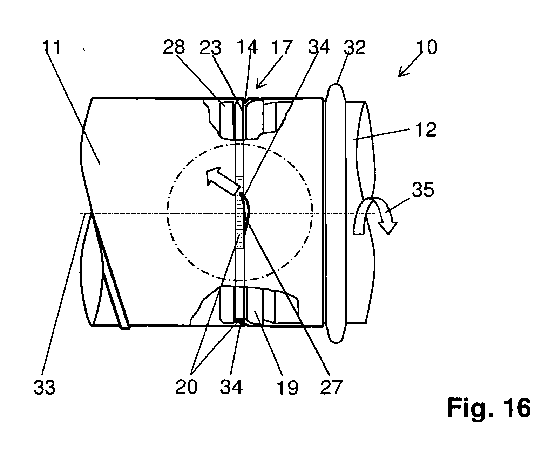

Die Figur 16 zeigt eine Prinzipdarstellung beim Lösen der Verbindung des ersten und zweiten Rohrelementes 11, 12 gemäß einer weiter bevorzugten Ausführungsform der Erfindung. Vorzugsweise umfassen alle vorgenannten Ausführungsformen die nachstehenden Merkmale dieser weiteren bevorzugten Ausführungsform. Diese weitere Ausführungsform zeichnet sich dadurch aus, dass das Verriegelungsbereich 27 weiter einen Führungsbereich 34 umfasst. Zum besseren Verständnis der Funktionsweise des Führungsbereichs 34 ist der Arretierungsabschnitt 20 in der Figur 16 mit einer Querschraffur versehen. Ferner ist das erste Rohrelement 11 teilweise transparent dargestellt, so dass aus der Figur 16 zu entnehmen ist, wie der Führungsbereich 34 den Arretierungsabschnitt hintergreift. Der Führungsbereich 34 ist mit zumindest einer ersten Seite zumindest an einem Teil des Verriegelungsbereichs 27 angrenzend angeordnet. Werden die ersten und zweiten Rohrelemente 11, 12 auf Zug belastet, so liegt das Dichtungsmittel 17 bzw. das Arretierungsmittel mit seiner Arretierungsfläche 23 an dem Verriegelungsmittel 14 an. Gleichzeitig greift der Führungsbereich 34 aufgrund seiner Anordnung an dem Verriegelungsbereich 27 zumindest auf einem Teilabschnitt über das Arretierungsmittel, d.h. das Dichtungsmittel 17 bzw. das Arretierungsmittel wird in Richtung der Rohraußenwand 16 des zweiten Rohrelements 12 gedrückt. Durch Drehen des zweiten Rohrelements 12 in eine Drehrichtung 35 relativ zu dem ersten Rohrelement 11 "drückt" der Führungsbereich 34 das Arretierungsmittel über den Bereich zwischen der Gleitfläche 22 und der Arretierungsfläche 23 des Arretierungsmittels. Durch weiteres Drehen des zweiten Rohrelements 12 relativ zu dem ersten Rohrelement 11 in die Drehrichtung 35 bei gleichzeitiger Beaufschlagung der ersten und zweiten Rohrelemente 11, 12 mit einer entsprechenden Zugkraft, wird das umlaufende Arretierungsmittel und oder das Dichtmittel 17 nach und nach über den Bereich zwischen der Gleitfläche 22 und der Arretierungsfläche 23 herübergeführt. Nach maximal einer halben Umdrehung des zweiten Rohrelements um 180° ist das Arretierungsmittel in jedem Fall über seine gesamte Umfangslänge über das Verrieglungsmittel 14 entgegen der Einschubrichtung 25 geführt, so dass die Verbindung des ersten und zweiten Rohrabschnitts 11, 12 wieder gelöst ist. Bevorzugt ist der Führungsbereich 34 ausgehend von der einen Seite sich verjüngend ausgebildet. So kann der Führungsbereich 34 beispielsweise als spitzwinklige Dreieckfläche ausgebildet sein. Es ist aber auch jede andere sich verjüngende Fläche als Führungsbereich 34 geeignet. Besonders bevorzugt ist der Führungsbereich 34 gegenüber der Längsachse 33 des ersten Rohrelements 11 schräg ausgerichtet. Durch diese schräge Ausrichtung des Führungsbereichs 34 wird erreicht, dass der Führungsbereich 34 zugleich eine Führungsfunktion erfüllt, indem der Führungsbereich 34 durch die Schrägstellung das Arretierungsmittel über das Verriegelungsmittel 14 führt und zugleich ein Zurückrutschen des Arretierungsmittels in die vorherige Ausgangsstellung verhindert, um ein Lösen der Verbindung der ersten und zweiten Rohrelemente nach einer halben Drehung von 180° in jedem Fall sicherzustellen. Der zum Lösen der Verbindung erforderliche Drehwinkel ist im Wesentlichen abhängig von der Ausrichtung des Führungsbereichs 34. Ein großer Drehwinkel zum Lösen der Verbindung ist erforderlich, wenn der Führungsbereich 34 im Wesentlichen parallel zu der Längsachse 33 ausgerichtet ist, während dieser mit einer größeren Schrägstellung des Führungsbereichs 34 gegenüber der Längsachse 33 entsprechend verringert ist.

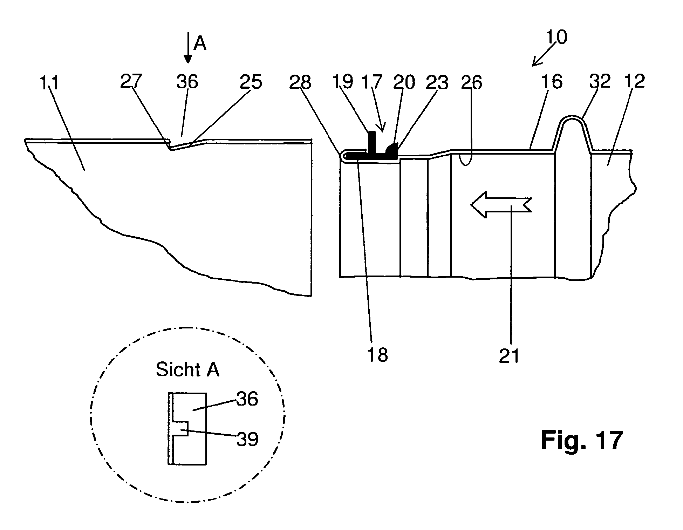

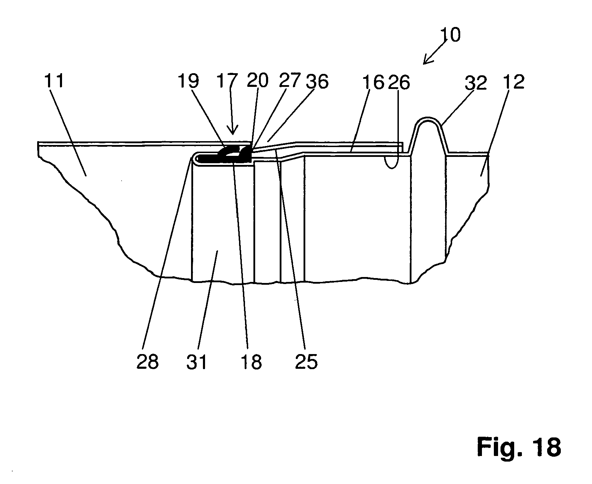

Die Figuren 17 bis 22 zeigen eine bevorzugte alternative sechste Ausführung der Erfindung. Diese sechste Ausführungsform der Erfindung entspricht grundsätzlich der in den Figuren 8 und 9 gezeigten zweiten Ausführung, jedoch mit dem Unterschied, dass das Verriegelungsmittel 14 als eine Stanzung 36 der Rohrwand 24 des ersten Rohrelements 11 ausgebildet ist. Selbstverständlich ist es auch möglich, dass das Verriegelungsmittel 14, wie in der Figur 17 in der Ansicht A vergrößert dargestellt, eine Kombination aus Einprägungen und einer oder mehrerer der Stanzungen 36 umfasst. So weist das in der Figur 17 gezeigte Verriegelungsmittel 14 beispielsweise die Stanzung 36 in U-Form auf und ist in Richtung des Rohrinneren zusätzlich mit einer Einprägung versehen, so dass das Verriegelungsmittel 14 als eine Ausklinkung ausgebildet ist, wie auch in der Figur 18 im eingeschobenen Zustand zu sehen ist.

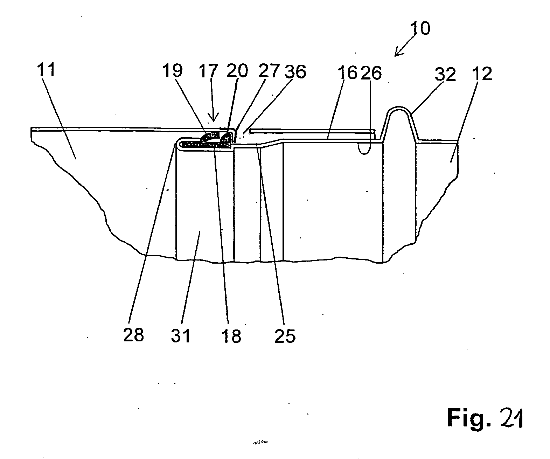

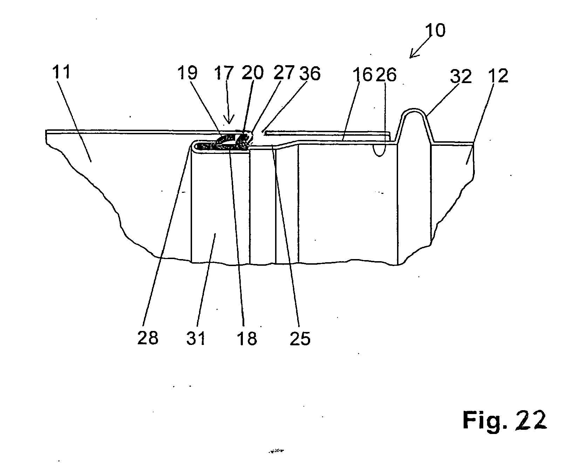

Die Figuren 21 und 22 zeigen alternative Ausbildungen für die Stanzung 36 in Verbindung mit einer Prägung. Bei der in der Figur 21 gezeigten Alternative muss nach erfolgter Stanzung zunächst das Rohrelement 12 in das Rohrelement 11 eingeschoben werden, bevor die ausgestanzte Klinke der Rohrwand 24 des ersten Rohrelements um den Arretierungsabschnitt 20 des Dichtungsmittels 17 gebogen werden kann. Bei der in Figur 22 gezeigten Alternative können wie auch im Falle der in Figur 18 gezeigten Alternative Stanzung und Prägung in einem Arbeitsschritt erfolgen, bevor das Rohrelement 12 in das Rohrelement 11 eingeschoben wird.

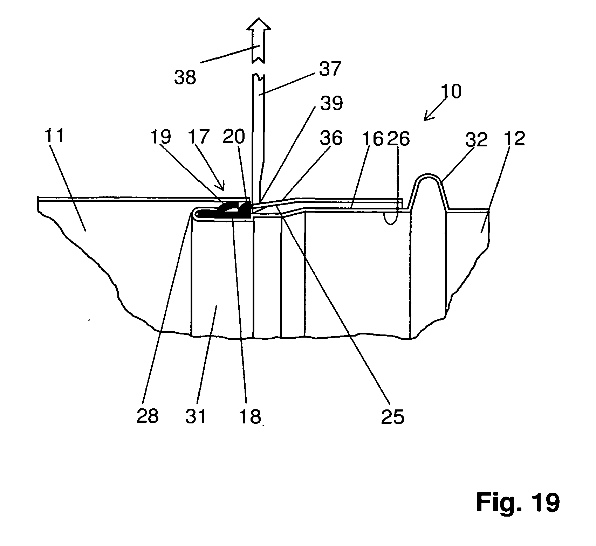

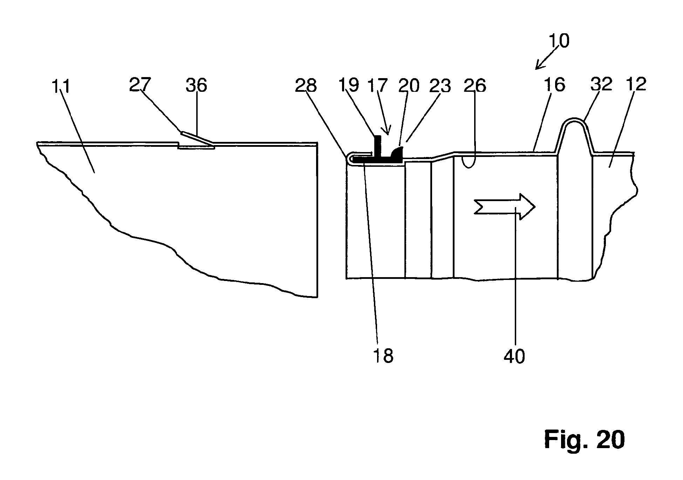

Wie in der Figur 19 dargestellt, kann diese Rohrverbindung mittels eines geeigneten Werkzeugszeugs 37 wieder gelöst werden. Dazu wird das Werkzeug 37 mit dem Verriegelungsmittel 14 in Eingriff gebracht und in eine Richtung 38 bewegt, so dass die Ausklinkung in die Richtung 38 gebogen wird, bis diese das Dichtungsmittel 17 bzw. das Arretierungsmittel so weit freigibt, dass die Rohrverbindung wieder getrennt werden kann. Entsprechend lassen sich auch die Verbindungen der in Figuren 21 und 22 gezeigten Alternativen mit einer geeigneten Bewegung durch ein Werkzeug 37 wieder lösen. Die Figur 20 zeigt die sechste Ausführung nach erfolgter Lösung der Verbindung.

Selbstverständlich ist es alternativ auch möglich, das Verriegelungsmittel 14 ausschließlich als eine Stanzung auszubilden.

## Patentansprüche

1. Anordnung (10) zum Verbinden von Rohrelementen (11, 12), umfassend
ein erstes Rohrelement (11) mit zumindest einem an der Rohrinnenwand (13) angeordneten Verriegelungsmittel (14),
ein zweites Rohrelement (12) mit einem Endabschnitt (15), wobei das zweite Rohrelement (12) zumindest im Bereich des Endabschnitts (15) in das erste Rohr (11) einschiebbar ist,
ein zumindest in einem Teilbereich des Endabschnitts (15) an dessen Rohraußenwand (16) vollständig umlaufend angeordnetes separates Dichtungsmittel (17), eingerichtet zum Abdichten einer Verbindung zwischen dem ersten Rohrelement (11) und dem zweiten Rohrelement (12), wobei
das Dichtungsmittel (17) zugleich als ein Arretierungsmittel zum Arretieren der ersten und zweiten Rohrelemente (11, 12) miteinander unter Eingriff des Dichtungsmittels (17) mit dem Verriegelungsmittel (14) eingerichtet und ausgebildet ist
und das Dichtungsmittel (17) einen Dichtungsmittelgrundkörper (18), zumindest einen Dichtungsabschnitt (19) und zumindest einen Arretierungsabschnitt (20) umfasst
**dadurch gekennzeichnet, dass**
der Dichtungsabschnitt (19) in einer nicht eingeschobenen ersten Position der ersten und zweiten Rohrelemente (11, 12) zumindest im Wesentlichen senkrecht zu der Rohraußenwand (16) des zweiten Rohrelements (12) angeordnet ist und in einer eingeschobenen zweiten Position der ersten und zweiten Rohrelemente (11, 12) derart ausgebildet und biegbar an dem Dichtungsmittelgrundkörper (18) angeordnet ist, dass sich der Dichtungsabschnitt (19) unter dichtendem Kontakt eines freien Schenkels des Dichtungsabschnitts (19) mit der Rohrinnenwand (13) des ersten Rohrelements (11) entgegen der Einschubrichtung (21) des zweiten Rohrelements (12) neigt.

2. Anordnung nach Anspruch 1, **dadurch gekennzeichnet, dass** der Arretierungsabschnitt (20) auf dem Dichtungsmittelgrundkörper (18) beabstandet von dem Dichtungsabschnitt (19) angeordnet ist und zumindest eine Gleitfläche (22) und eine Arretierungsfläche (23) aufweist.

3. Anordnung nach Anspruch 2, **dadurch gekennzeichnet, dass** die Gleitfläche (22) bezüglich einer Senkrechten S zu der Rohrwand (24) entgegen der Einschubrichtung geneigt und/oder gekrümmt ausgebildet ist.

4. Anordnung nach Anspruch 2, **dadurch gekennzeichnet, dass** die Arretierungsfläche (23) gegenüber einer Senkrechten S zu der Rohrwand (24) in die Einschubrichtung (21) geneigt und/oder gekrümmt ausgebildet ist.

5. Anordnung nach einem der Ansprüche 1 bis 4, **dadurch gekennzeichnet, dass** das Dichtungsmittel (17) einstückig ausgebildet ist.

6. Anordnung nach einem der Ansprüche 1 bis 5, **dadurch gekennzeichnet, dass** das Verriegelungsmittel (14) als eine Einprägung und/oder Stanzung (36) der Rohrwand (24) des ersten Rohrelements (11) ausgebildet ist und einen Gleitbereich (25) zum Vorbeiführen des Dichtungsmittels (17) bzw. des Arretierungsmittels an dem Verriegelungsmittel (14) beim Einschieben des zweiten Rohrelements (12) von der ersten Position in die zweite Position sowie einen Verriegelungsbereich (27) zum Arretieren der ersten und zweiten Rohrelemente (11, 12) miteinander in der zweiten Position aufweist.

7. Anordnung nach Anspruch 6, **dadurch gekennzeichnet, dass** der Verriegelungsbereich (27) zumindest teilweise korrespondierend zu dem Arretierungsmittel derart eingerichtet und ausgebildet ist, dass die ersten und zweiten Rohrelemente (11, 12) in der zweiten Position mittels Formschluss zwischen dem Verriegelungsbereich (27) und dem Arretierungsmittel miteinander arretiert sind.

8. Anordnung nach einem der Ansprüche 6 oder 7, **dadurch gekennzeichnet, dass** der Verriegelungsbereich (27) weiter einen Führungsbereich (34) umfasst, wobei der Fülmungsbereich (34) mit zumindest einer ersten Seite zumindest an einem Teil des Verriegelungsbereichs (27) angrenzend angeordnet ist.

9. Anordnung nach Anspruch 8, **dadurch gekennzeichnet, dass** der Führungsbereich (34) ausgehend von der einen Seite sich verjüngend ausgebildet ist.

10. Anordnung nach einem der Ansprüche 8 oder 9, **dadurch gekennzeichnet, dass** der Führungsbereich (34) gegenüber einer Längsachse (33) des ersten Rohrelements (11) schräg ausgerichtet ist.

## Claims

1. Arrangement (10) for connecting pipe elements (11, 12), comprising
a first pipe element (11) having at least one locking means (14) arranged on the pipe inner wall (13),
a second pipe element (12) having an end section (15), wherein the second pipe element (12) can be inserted into the first pipe (11) at least in the region of the end section (15),
a separate sealing means (17) arranged at least in a part region of the end section (15) to be completely surrounding its pipe outer wall (16), equipped to seal a connection between the first pipe element (11) and the second pipe element (12), wherein
the sealing means (17) is equipped and designed at the same time as an arresting means to arrest the first and second pipe elements (11, 12) with each other while engaging the sealing means (17) with the locking means (14) and the sealing means (17) comprises a sealing means base body (18), at least one sealing section (19) and at least one arresting section (20),
**characterised in that**
the sealing section (19) in a non-inserted first position of the first and second pipe elements (11, 12) is arranged at least essentially vertically to the pipe outer wall (16) of the second pipe element (12) and in an inserted second position of the first and second pipe elements (11, 12) is arranged on the sealing means base body (18) to be designed and flexible such that the sealing section (19) is inclined counter to the insertion direction (21) of the second pipe element (12) with sealing contact of a free limb of the sealing section (19) with the pipe inner wall (13) of the first pipe element (11).

2. Arrangement according to claim 1, **characterised in that** the arresting section (20) is arranged on the sealing means base body (18) spaced from the sealing section (19) and has at least one sliding surface (22) and one arresting surface (23).

3. Arrangement according to claim 2, **characterised in that** the sliding surface (22) is designed to be inclined and/or curved with respect to a normal S to the pipe wall (24) counter to the insertion direction.

4. Arrangement according to claim 2, **characterised in that** the arresting surface (23) is designed to be inclined and/or curved with respect to a normal S to the pipe wall (24) in the insertion direction (21).

5. Arrangement according to one of claims 1 to 4, **characterised in that** the sealing means (17) is designed to be integral.

6. Arrangement according to one of claims 1 to 5, **characterised in that** the locking means (14) is designed as embossing and/or stamping (36) of the pipe wall (24) of the first pipe element (11) and has a sliding region (25) to pass the sealing means (17) or the arresting means along the locking means (14) during insertion of the second pipe element (12) from the first position to the second position, and a locking region (27) to arrest the first and second pipe elements (11, 12) with each other in the second position.

7. Arrangement according to claim 6, **characterised in that** the locking region (27) is equipped and designed at least partly to correspond to the arresting means such that the first and second pipe elements (11, 12) are arrested with each other in the second position by means of positive locking between the locking region (27) and the arresting means.

8. Arrangement according to one of claims 6 or 7, **characterised in that** the locking region (27) further comprises a guide region (34), wherein the guide region (34) with at least one first side is arranged to be adjoining at least one part of the locking region (27).

9. Arrangement according to claim 8, **characterised in that** the guide region (34), starting from the one side, is designed to be tapered.

10. Arrangement according to one of claims 8 or 9, **characterised in that** the guide region (34) is aligned to be inclined with respect to a longitudinal axis (33) of the first pipe element (11).

## Revendications

1. Agencement (10) permettant de relier des éléments tubulaires (11, 12) comportant
un premier élément tubulaire (11) avec au moins un moyen (14) de verrouillage monté sur la paroi interne (13) du tube
un deuxième élément tubulaire (12) avec une partie terminale (15), le deuxième élément tubulaire (12) pouvant être inséré dans le premier tube (11) au moins dans la zone de la partie terminale (15),
un moyen (17) d'étanchéité séparé, disposé sur toute la périphérie au moins dans une section de la partie terminale (15), sur la paroi externe (16) du tube, moyen qui est conçu pour étanchéifier une liaison entre le premier élément tubulaire (11) et le deuxième élément tubulaire (12), dans lequel,
le moyen (17) d'étanchéité est conçu et réalisé en même temps comme un moyen d'arrêt permettant de bloquer ensemble les premier et deuxième éléments tubulaires (11, 12), le moyen (17) d'étanchéité entrant en action avec le moyen (14) de verrouillage,
et le moyen (17) d'étanchéité comporte un corps (18) de base du moyen d'étanchéité, au moins une zone (19) d'étanchéité et au moins une zone (20) d'arrêt,
**caractérisé en ce que**
la zone (19) d'étanchéité est disposée, dans une première position non rentrée des premier et deuxième éléments tubulaires (11, 12), au moins sensiblement perpendiculairement à la paroi externe (16) du deuxième élément tubulaire (12) et est réalisée dans une deuxième position rentrée des premier et deuxième éléments tubulaires (11, 12) et disposée de manière flexible sur le corps (18) de base du moyen d'étanchéité, de telle sorte que la zone (19) d'étanchéité est inclinée dans le sens opposé au sens (21) d'insertion du deuxième élément tubulaire (12) avec contact étanche d'un côté libre de la zone (19) d'étanchéité et de la paroi interne (13) du premier élément tubulaire (11).

2. Agencement selon la revendication 1, **caractérisé en ce que** la zone (20) d'arrêt est espacée de la zone (19) d'étanchéité sur le corps (18) de base du moyen d'étanchéité et présente au moins une surface (22) de glissement et une surface (23) d'arrêt.

3. Agencement selon la revendication 2, **caractérisé en ce que** la surface (22) de glissement est conçue de manière inclinée et/ou incurvée dans le sens opposé au sens d'insertion concernant un S perpendiculaire à la paroi (24) du tube.

4. Agencement selon la revendication 2, **caractérisé en ce que** la surface (23) d'arrêt est conçue de manière inclinée et/ou incurvée dans le sens d'insertion (21) à l'inverse d'un S perpendiculaire à la paroi (24) du tube.

5. Agencement selon l'une quelconque des revendications 1 à 4, **caractérisé en ce que** le moyen (17) d'étanchéité est conçu d'un seul tenant.

6. Agencement selon l'une quelconque des revendications 1 à 5, **caractérisé en ce que** le moyen (14) de verrouillage est réalisé comme une incrustation et/ou un poinçonnage (36) de la paroi (24) du premier élément tubulaire (11) et présente une zone (25) de glissement pour le passage du moyen (17) d'étanchéité ou du moyen d'arrêt sur le moyen (14) de verrouillage lors de l'insertion du deuxième élément tubulaire (12) de la première position à la deuxième position ainsi qu'une zone (27) de verrouillage servant à bloquer les premier et deuxième éléments tubulaires (11, 12) ensemble dans la deuxième position.

7. Agencement selon la revendication 6, **caractérisé en ce que** la zone (27) de verrouillage est conçue et réalisée au moins en partie de manière correspondante au moyen d'arrêt, de telle sorte que les premier et deuxième éléments tubulaires (11, 12) sont bloqués ensemble dans la deuxième position par complémentarité de formes entre la zone (27) de verrouillage et le moyen d'arrêt.

8. Agencement selon l'une quelconque des revendications 6 ou 7, **caractérisé en ce que** la zone (27) de verrouillage comporte en outre une zone (34) de guidage, la zone (34) de guidage étant disposée avec au moins un premier côté attenant à au moins une partie de la zone (27) de verrouillage.

9. Agencement selon la revendication 8, **caractérisé en ce que** la zone (34) de guidage est réalisée en se rétrécissant à partir dudit côté.

10. Agencement selon l'une quelconque des revendications 8 ou 9, **caractérisé en ce que** la zone (34) de guidage est orientée de manière oblique par rapport à un axe longitudinal (33) du premier élément tubulaire (11).
